# EUROPÄISCHE PATENTSCHRIFT

(11) **EP 1 954 127 B1**
(45) Veröffentlichungstag und Bekanntmachung des Hinweises auf die Patenterteilung: **16.09.2009**
(21) Anmeldenummer: 06829070.9
(22) Anmeldetag: 17.11.2006
(51) Int. Cl.: A01N 25/02, A01N 43/46

(54) **AGROCHEMISCHE ZUSAMMENSETZUNG**
AGROCHEMICAL COMPOSITION
COMPOSITION AGROCHIMIQUE

(30) Priorität: 23.11.2005 DE 102005055739
(43) Veröffentlichungstag der Anmeldung: 13.08.2008
(73) Patentinhaber: Clariant Produkte (Deutschland) GmbH, 65929 Frankfurt am Main (DE)
(72) Erfinder: SOWA, Christian, 67435 Neustadt/Weinstr. (DE); WALTER, Michael, Marcus, 65835 Liederbach (DE)
(74) Vertreter: Clariant Produkte (Deutschland) GmbH
(86) Internationale Anmeldenummer: PCT/EP2006/011037
(87) Internationale Veröffentlichungsnummer: WO 2007/059896

(56) Entgegenhaltungen:
- EP-A- 0 077 078
- EP-A- 0 453 915
- DD-A5- 298 339
- DATABASE WPI Week 199515 Derwent Publications Ltd., London, GB; AN 1995-110499 XP002462092 & JP 07 033605 A (NIHON NOYAKU CO LTD) 3. Februar 1995 (1995-02-03)

## Beschreibung

Die vorliegende Erfindung betrifft agrochemische Zusammensetzungen enthaltend Acetylcaprolactam.

Um agrochemische Wirksubstanzen in Lösung zu bringen, wird bisher in vielen Formulierungen N-Methyl-2-Pyrrolidon (NMP) als Lösungsmittel eingesetzt.

In jüngster Zeit wurde in Tierversuchen eine fruchtschädigende Wirkung von N-Methyl-2-Pyrrolidon beobachtet, so dass man nun bestrebt ist, andere Lösungsmittel bzw. Lösungsmittelsysteme zu finden, die ähnlich gute Löseeigenschaften wie NMP aufweisen und gleichzeitig toxikologisch und ökotoxikologisch vorteilhafter sind.

Überraschend wurde nun gefunden, dass Acetylcaprolactam gute Lösungsmitteleigenschaften aufweist und eine Vielzahl an agrochemischen Wirksubstanzen bzw. Wirkstoffen zu lösen vermag.

Gegenstand der Erfindung sind Zusammensetzungen enthaltend
a) ein oder mehrere agrochemische Wirkstoffe und
b) die Substanz der Formel (I) 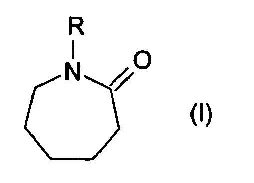 in der R Acetyl
   ist.

Die erfindungsgemäßen Zusammensetzungen enthalten somit
a) ein oder mehrere agrochemische Wirkstoffe und
b) Acetylcaprolactam.

Die agrochemischen Wirkstoffe können beispielsweise ausgewählt sein
1. aus der Gruppe der Phosphorverbindungen, vorzugsweise Acephate, Azamethiphos, Azinphos-ethyl, Azinphosmethyl, Bromophos, Bromophos-ethyl, Cadusafos (F-67825), Chlorethoxyphos, Chlorfenvinphos, Chlormephos, Chlorpyrifos, Chlorpyrifos-methyl, Demeton, Demeton-S-methyl, Demeton-S-methyl sulfphone, Dialifos, Diazinon, Dichlorphos, Dimethoate, Disulfoton, EPN, Ethion, Ethoprophos, Etrimfos, Famphur, Fenamiphos, Fenitrothion, Fensulfothion, Fenthion, Fonofos, Formothion, Fosthiazate (ASC-66824) Heptenophos, Isozophos, Isothioate, Isoxathion, Malathion, Methacrifos, Methamidophos, Methidathion, Salithion, Mevinphos, Monocrotophos, Naled, Omethoate, Oxydemeton-methyl, Parathion, Parathionmethyl, Phenthoate, Phorate, Phosalone, Phosfolan, Phosphocarb (BAS-301), Phosmet, Phosphamidon, Phoxim, Pirimiphos, Pirimiphos-ethyl, Pirimiphosmethyl, Profenofos, Propaphos, Proetamphos, Prothiofos, Pyraclofos, Pyridaphenthion, Quinalphos, Sulprofos, Temephos, Terbufos, Tebupirimfos, Tetrachlorvinphos, Thiodemeton, Triazophos, Trichlorphon, Vamidothion;
2. aus der Gruppe der Carbamate, vorzugsweise Alanycarb (OK-135), Aldicarb, 2-sec.-Butylphenylmethylcarbamate (BPMC), Carbaryl, Carbofuran, Carbosulfan, Cloethocarb, Benfuracarb, Ethiofencarb, Furathiocarb, HCN-801, Isoprocarb, Methomyl, 5-Methyl-m-cumenylbutyryl-(methyl)carbamate, Oxamyl, Pirimicarb, Propoxur, Thiodicarb, Thiofanox, 1-Methylthio(ethylideneamino)-N-methyl-N-(morpholinothio)carbamate (UC 51717), Triazamate;
3. aus der Gruppe der Carbonsäureester, vorzugsweise Acrinathrin, Allethrin, Alphametrin, Beta-Cypermethrin, 5-Benzyl-3-furylmethyl-(E)-, (1R)-cis-2,2-di-methyl-3-(2-oxothiolan-3-ylidenemethyl)cyclopropanecarboxylate, Beta-Cyfluthrin, Beta-Cypermethrin, Bioallethrin, Bioallethrin((S)-cyclopentylisomer), Bioresmethrin, Bifenthrin, (RS)-1-Cyano-1-(6-phenoxy-2-pyridyl)methyl-(1RS)-trans-3-(4-tert.butylphenyl)-2,2-dimethylcyclopropane-carboxylate (NCI 85193), Cycloprothrin, Cyfluthrin, Cyhalothrin, Cythrin, Cypermethrin, Cyphenothrin, Deltamethrin, Empenthrin, Esfenvalerate, Fenfluthrin, Fenpropathrin, Fenvalerate, Flucythrinate, Flumethrin, Fluvalinate (D-Isomer), Imiprothrin (S-41311), Lambda-Cyhalothrin, Permethrin, Phenothrin ((R)-Isomer), Prallethrin, Pyrethrine (natürliche Produkte), Resmethrin, Tefluthrin, Tetramethrin, Theta-Cypermethrin (TD-2344), Tralomethrin, Transfluthrin, Zeta-Cypermethrin (F-56701);
4. aus der Gruppe der Amidine, vorzugsweise Amitraz, Chlordimeform;
5. aus der Gruppe der Zinnverbindungen, vorzugsweise Cyhexatin, Fenbutatinoxide; sowie
6. aus weiteren agrochemischen Wirkstoffen, vorzugsweise Abamectin, ABG-9008, Acetamiprid, Anagrapha falcitera, AKD-1022, AKD-3059, ANS-118, Bacillus thuringiensis, Beauveria bassianea, Bensultap, Bifenazate (D-2341), Binapacryl, BJL-932, Bromopropylate, BTG-504, BTG-505, Buprofezin, Camphechlor, Cartap, Chlorobenzilate, Chlorfenapyr, Chlorfluazuron, 2-(4-Chlorphenyl)-4,5-diphenylthiophen (UBI-T 930), Chlorfentezine, Chromafenozide (ANS-118), CG-216, CG-217, CG-234, A-184699, Cyclopropancarbonsäure-(2-naphthylmethyl)ester (Ro12-04770), Cyromazin, Diacloden (Thiamethoxam), Diafenthiuron, N-(3,5-Dichlor-4-(1,1,2,3,3,3,-hexafluor-1-propyloxy) phenyl)carbamoyl)-2-chlorbenzcarboximidsäureethyl-ester, DDT, Dicofol, Diflubenzuron, N-(2,3-Dihydro-3-methyl-1,3-thiazol-2-ylidene)-2,4-xylidine, Dinobuton, Dinocap, Diofenolan, DPX-062, Emamectin-Benzoate (MK-244), Endosulfan, Ethiprole (Sulfethiprole), Ethofenprox, Etoxazole (YI-5301), Fenazaquin, Fenoxycarb, Fipronil, Fluazuron, Flumite (Flufenzine, SZI-121), 2-Fluoro-5-(4-(4-ethoxyphenyl)-4-methyl-1-pentyl)diphenylether (MTI 800), Granulose- und Kernpolyederviren, Fenpyroximate, Fenthiocarb, Flubenzimine, Flucycloxuron, Flufenoxuron, Flufenprox (ICI-A5683), Fluproxyfen, Gamma-HCH, Halofenozide (RH-0345), Halofenprox (MTI-732), Hexaflumuron (DE_473), Hexythiazox, HOI-9004, Hydramethylnon (AC 217300), Lufenuron, Imidacloprid, Indoxacarb (DPX-MP062), Kanemite (AKD-2023), M-20, MTI-446, Ivermectin, M-020, Methoxyfenozide (Intrepid, RH-2485), Milbemectin, NC-196, Neemgard, Nitenpyram (TI-304), 2-Nitromethyl-4,5-dihydro-6H-thiazin (DS 52618), 2-Nitromethyl-3,4-dihydrothiazol (SD 35651), 2-Nitromethylene-1,2-thiazinan-3-ylcarbamaldehyde (WL108477), Pyriproxyfen (S-71639), NC-196, NC-1111, NNI-9768, Novaluron (MCW-275), OK-9701, OK-9601, OK-9602, Propargite, Pymetrozine, Pyridaben, Pyrimidifen (SU-8801), RH-0345, RH-2485, RYI-210, S-1283, S-1833, SB7242, SI-8601, Silafluorfen, Silomadine (CG-177), Spinosad, SU-9118, Tebufenozide, Tebufenpyrad (MK-239), Teflubenzuron, Tetradifon, Tetrasul, Thiacloprid, Thiocyclam, TI-435, Tolfenpyrad (OMI-88), Triazamate (RH-7988), Triflumuron, Verbutin, Vertalec (Mykotal), YI-5301.

Die in den erfindungsgemäßen Zusammensetzungen enthaltenen agrochemischen Wirkstoffe sind vorzugsweise ausgewählt aus der Gruppe der Pestizide, Phytohormone und Herbizid-Safener, besonders bevorzugt aus der Gruppe der Pestizide und Herbizid-Safener und insbesondere bevorzugt aus Pestiziden.

Bevorzugte Pestizide sind ausgewählt aus Herbiziden, Insektiziden, Fungiziden, Akariziden, Bakteriziden, Molluskiden, Nematiziden und Rodentiziden.

Bevorzugte Herbizide sind z.B. folgende Substanzen: acetochlor; acifluorfen; aclonifen; AKH 7088, d.h. [[[1-[5-[2-Chloro-4-(trifluoromethyl)-phenoxy]-2-nitrophenyl]-2-methoxyethylidene]-amino]-oxy]-essigsäure und -essigsäuremethylester; alachlor; alloxydim; ametryn; amidosulfuron; amitrol; AMS, d.h. Ammoniumsulfamat; anilofos; asulam; atrazin; azimsulfurone (DPX-A8947); aziprotryn; barban; BAS 516 H, d.h. 5-Fluor-2-phenyl-4H-3,1-benzoxazin-4-on; benazolin; benfluralin; benfuresate; bensulfuronmethyl; bensulide; bentazone; benzofenap; benzofluor; benzoylprop-ethyl; benzthiazuron; bialaphos; bifenox; bromacil; bromobutide; bromofenoxim; bromoxynil; bromuron; buminafos; busoxinone; butachlor; butamifos; butenachlor; buthidazole; butralin; butylate; cafenstrole (CH-900); carbetamide; cafentrazone (ICI-A0051); CDAA, d.h. 2-Chlor-N,N-di-2-propenylacetamid; CDEC, d.h. Diethyldithiocarbaminsäure₋2-chlorallylester; chlomethoxyfen; chloramben; chlorazifop-butyl, chlormesulon (ICI-A0051); chlorbromuron; chlorbufam; chlorfenac; chlorflurecol-methyl; chloridazon; chlorimuron ethyl; chlornitrofen; chlorotoluron; chloroxuron; chlorpropham; chlorsulfuron; chlorthal-dimethyl; clethodim; clodinafop und dessen Esterderivate (z.B. clodinafop-propargyl); clomazone; clomeprop; cloproxydim; clopyralid; cumyluron (JC 940); cyanazine; cycloate; cyclosulfamuron (AC 104); cycloxydim; cycluron; cyhalofop und dessen Esterderivate (z.B. Butylester, DEH-112); cyperquat; cyprazine; cyprazole; 2,4-D und seine Salze (z.B. Isopropylaminsalz); daimuron; 2,4-DB; dalapon; desmedipham; desmetryn; di-allate; dicamba; dichlobenil; dichlorprop; diclofop und dessen Ester wie diclofop-methyl; diethatyl; difenoxuron; difenzoquat; diflufenican; dimefuron; dimethachlor; dimethametryn; dimethenamid (SAN-582H); dimethazone; clomazon; dimethipin; dimetrasulfuron; dinitramine; dinoseb; dinoterb; diphenamid; dipropetryn; diquat; dithiopyr; diuron; DNOC; eglinazineethyl; EL 77, d.h. 5-Cyano-1-(1,1-dimethylethyl)-N-methyl-1H-pyrazole-4-carboxamid; endothal; EPTC; esprocarb; ethalfluralin; ethametsulfuron-methyl; ethidimuron; ethiozin; ethofumesate; F5231,d.h. N-[2-Chlor-4-fluor-5-[4-(3-fluorpropyl)-4,5-dihydro-5-oxo-1H-tetrazol-1-yl]-phenyl]-ethansulfonamid; ethoxyfen und dessen Ester (z.B. Ethylester, HN-252); etobenzanid (HW 52); fenoprop; fenoxan, fenoxaprop und fenoxaprop-P sowie deren Ester, z.B. fenoxaprop-P-ethyl und fenoxaprop-ethyl; fenoxydim; fenuron; flamprop-methyl; flazasulfuron; fluazifop und fluazifop-P und deren Ester, z.B. fluazifop-butyl und fluazifop-P-butyl; fluchloralin; flumetsulam; flumeturon; flumiclorac und dessen Ester (z.B. Pentylester, S-23031); flumioxazin (S-482); flumipropyn; flupoxam (KNW-739); fluorodifen; fluoroglycofen-ethyl; flupropacil (UBIC-4243); fluridone; flurochloridone; fluroxypyr; flurtamone; fomesafen; fosamine; furyloxyfen; glufosinate; glyphosate; halosafen; halosulfuron und dessen Ester (z.B. Methylester, NC-319); haloxyfop und dessen Ester; haloxyfop-P (= R-haloxyfop) und dessen ester; hexazinone; imazamethabenz-methyl; imazapyr; imazaquin und Salze wie das Ammoniumsalz; imazethamethapyr; imazethapyr; imazosulfuron; ioxynil; isocarbamid; isopropalin; isoproturon; isouron; isoxaben; isoxapyrifop; karbutilate; lactofen; lenacil; linuron; MCPA; MCPB; mecoprop; mefenacet; mefluidid; metamitron; metazachlor; methabenzthiazuron; metham; methazole; methoxyphenone; methyldymron; metabenzuron; methobenzuron; metobromuron; metolachlor; metosulam (XRD 511); metoxuron; metribuzin; metsulfuron-methyl; MH; molinate; monalide; monocarbamide dihydrogensulfate; monolinuron; monuron; MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyl]-2-methylpentanamid; naproanilide; napropamide; naptalam; NC 310, d.h. 4-(2,4-dichlorbenzoyl)-1-methyl-5-benzyloxypyrazol; neburon; nicosulfuron; nipyraclophen; nitralin; nitrofen; nitrofluorfen; norflurazon; orbencarb; oryzalin; oxadiargyl (RP-020630); oxadiazon; oxyfluorfen; paraquat; pebulate; pendimethalin; perfluidone; phenisopham; phenmedipham; picloram; piperophos; piributicarb; pirifenop-butyl; pretilachlor; primisulfuron-methyl; procyazine; prodiamine; profluralin; proglinazine-ethyl; prometon; prometryn; propachlor; propanil; propaquizafop und dessen Ester; propazine; propham; propisochlor; propyzamide; prosulfalin; prosulfocarb; prosulfuron (CGA-152005); prynachlor; pyrazolynate; pyrazon; pyrazosulfuron-ethyl; pyrazoxyfen; pyridate; pyrithiobac (KIH-2031); pyroxofop und dessen Ester (z.B. Propargylester); quinclorac; quinmerac; quinofop und dessen Esterderivate, quizalofop und quizalofop-P und deren Esterderivate z.B. quizalofop-ethyl; quizalofop-P-tefuryl und -ethyl; renriduron; rimsulfuron (DPX-E 9636); S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; SN 106279, d.h. 2-[[7-[2-Chlor-4-(trifluor-methyl)-phenoxy]-2-naphthalenyl]-oxy]-propansäure und -methylester; sulfentrazon (FMC-97285, F-6285); sulfazuron; sulfometuron-methyl; sulfosate (ICI-A0224); TCA; tebutam (GCP-5544); tebuthiuron; terbacil; terbucarb; terbuchlor; terbumeton; terbuthylazine; terbutryn; TFH 450; d.h. N,N-Diethyl-3-[(2-ethyl-6-methylphenyl)-sulfonyl]-1 H-1,2,4-triazol-1-carboxamid; thenylchlor (NSK-850); thiazafluron; thiazopyr (Mon-13200); thidiazimin (SN-24085); thifensulfuronmethyl; thiobencarb; tiocarbazil; tralkoxydim; tri-allate; triasulfuron; triazofenamide; tribenuron-methyl; triclopyr; tridiphane; trietazine; trifluralin; triflusulfuron und Ester (z.B. Methylester, DPX-66037); trimeturon; tsitodef; vernolate; WL 110547, d.h. 5-Phenoxy-1-[3-(trifluormethyl)-phenyl]-1H-tetrazol; UBH-509; D-489; LS 82-556; KPP-300; NC-324; NC-330; KH-218; DPX-N8189; SC-0774; DOWCO-535; DK-8910; V-53482; PP-600; MBH-001; KIH-9201; ET-751; KIH-6127 und KIH-2023.

### Bevorzugte Fungizide sind z.B. folgende Substanzen:

Aldimorph, Andoprim, Anilazine, Azoxystrobin, Azaconazole, BAS 450F, Benalaxyl, Benodanil, Benomyl, Bethoxazin, Binapacryl, Bion (CGA-245704), Bitertanol, Bromuconazole, Buthiobate, Captafol, Captan, Carbendazim, Carboxin, Carpropamide, CGA 173506, Cymoxanil, Cyprodinil, Cyprofuram, Diflumetorim, Dichlofluanid, Dichlomezin, Diclobutrazol, Diclocymet (S-2900), Diclomezine, Diethofencarb, Difenoconazol (CGA 169374), Difluconazole, Dimethirimol, Dimethomorph, Diniconazole, Dinocap, Dithianon, Dodemorph, Dodine, Edifenfos, Epoxiconazole, Ethirimol, Etridiazol, Famoxadone, (DPX-JE874), Fenarimol, Fenbuconazole, Fenfuram, Fenhexamid, Fenpiclonil, Fenpropidin, Fenpropimorph, Fentinacetate, Fentinhydroxide, Ferimzone (TF164), Fluazinam, Fluobenzimine, Fludioxonil, Flumetover (RPA-403397), Fluquinconazole, Fluorimide, Flusilazole, Flusulfamide, Flutolanil, Flutriafol, Folpet, Fosetylaluminium, Fuberidazole, Furalaxyl, Furconazol, Furametpyr (S-82658), Furmecyclox, Guazatine, Hexaconazole, Imazalil, Imibenconazole, Ipconazole, Iprobenfos, Iprodione, Isoprothiolana, KNF 317, Kresoxim-methyl (BAS-490F), Kupferverbindungen wie Cu-oxychlorid, Oxine-Cu, Cu-oxide, Mancozeb, Maneb, Mepanipyrim (KIF 3535), Mepronil, Metalaxyl, Metalaxyl-M (CGA-329351), Metconazole, Methasulfocarb, Methfuroxam, Metominofen (SSF-126), Metominostrobin (Fenominostrobin, SSF-126), MON 24000, MON-6550, MON-41100, Myclobutanil, Nabam, Nitrothalisopropyl, Nuarimol, Ofurace, OK-9601, OK-9603, Oxadixyl, Oxycarboxin, Paclobutrazol, Penconazol, Pencycuron, PP 969, Polyoxins, Probenazole, Propineb, Prochloraz, Procymidon, Propamocarb, Propiconazol, Prothiocarb, Pyracarbolid, Pyrazophos, Pyrifenox, Pyrimethanil, Pyroquilon, Quinoxyfen (DE-795), Rabenzazole, RH-7592, RH-7281, Schwefel, Spiroxamine, SSF-109, Tebuconazole, Tetraconazole, TTF 167, Thiabendazole, Thicyofen, Thifluzamide (RH-130753), Thiofanatemethyl, Thiram, TM-402, Tolclofos-methyl, Tolylfluanid, Triadimefon, Triadimenol, Triazoxide, Trichoderma harzianum(DHF-471), Tricyclazole, Tridemorph, Triflumizol, Triforine, Triflumizole (UCC-A815), Triticonazole, Uniconazole, Validamycin, Vinchlozolin, XRD 563, Zineb, Natriumdodecylsulfonate, Natrium-dodecyl-sulfat, Natrium-C₁₃/C₁₅-alkohol-ethersulfonat, Natrium-cetostearyl-phosphatester, Dioctyl-natrium-sulfosuccinat, Natrium-isopropyl-naphthalenesulfonat, Natrium-methylenebisnaphthalenesulfonat, Cetyl-trimethyl-ammoniumchlorid, Salze von langkettigen primären, sekundären oder teritären Aminen, Alkyl-propyleneamine, Laurylpyrimidiniumbromid, ethoxylierte quarternierte Fettamine, Alkyl-dimethyl-benzylammoniumchlorid und 1-Hydroxyethyl-2-alkyl-imidazolin.

Bevorzugte Phytohormone (Pflanzenhormone) sind ausgewählt aus Auxinen, vorzugsweise Indol-3-essigsäure, Methyl-4-chlorindol-3-acetat, 4-Chlorindolacetylaspartat, Substanzen aus der Gruppe der Gibberelline (Diterpene) und Zytokinine, wachstumshemmenden Phytohormonen, vorzugsweise Abscisinsäure, Xanthaxine, Jasmonsäure, Jasmonate und Ethylen freisetzenden Substanzen, vorzugsweise L-Methionin.

Herbizid-Safener sind Substanzen, die die Nutzpflanzen vor der Wirkung der Herbizide schützen. Bevorzugte Herbizid-Safener sind ausgewählt aus 4-Dichloroacetyl-3,4-dihydro-3-methyl-2H-1,4-benzoxazine (benzoxacor), Cloquinfocet, Dichlormid, Fenclorim, Herbicide safener AD-67 und Mefenpyr-Diethyl.

Die erfindungsgemäßen Zusammensetzungen enthalten besonders bevorzugt agrochemische Wirkstoffe ausgewählt aus Flufenoxuron, Pendimethalin, Phenmedipham, Prochloraz, Tebuconazol, Triforine und 2,4-D als Isopropylaminsalz.

Die agrochemischen Wirkstoffe sind entweder mit dem "common name" nach der International Organization for Standardization (ISO) oder mit dem chemischen Namen, gegebenenfalls zusammen mit einer üblichen Codenummer, bezeichnet.

Die erfindungsgemäßen Zusammensetzungen können zusätzlich Tenside, Verdickungsmittel, Antigelmittel, Frostmittel, Lösungsmittel, Dispergiermittel, Emulgatoren, Konservierungsmittel, Adjuvants, Bindemittel, Antischaummittel, Verdünner, Sprengmittel und Netzmittel enthalten.

Das Gewichtsverhältnis von Komponente a) : Komponente b) in den erfindungsgemäßen Zusammensetzungen ist vorzugsweise von 90:1 bis 1:90, besonders bevorzugt von 9:1 bis 1:9 und insbesondere bevorzugt von 4:1 bis 1:4.

In einer bevorzugten Ausführungsform enthalten die erfindungsgemäßen Zusammensetzungen ein oder mehrere Substanzen ausgewählt aus nichtionischen, anionischen, kationischen und amphoteren Tensiden.

Bevorzugte anionische Tenside sind geradkettige und verzweigte Alkylsulfate, -sulfonate, -carboxylate, -phosphate, -sulphosuccinate und -taurate, Alkylestersulfonate, Arylalkylsulfonate und Alkylethersulfate. Alkylsulfate sind wasserlösliche Salze oder Säuren der Formel ROSO₃M, worin R bevorzugt einen C₁₀-C₂₄-Kohlenwasserstoffrest, besonders bevorzugt einen Alkyl- oder Hydroxyalkylrest mit 10 bis 20 C-Atomen und insbesondere bevorzugt einen C₁₂-C₁₈-Alkyl- oder Hydroxyalkylrest darstellt. M ist Wasserstoff oder ein Kation, vorzugsweise ein Alkalimetallkation (z.B. Natrium, Kalium, Lithium) oder Ammonium oder substituiertes Ammonium, z.B. ein Methyl-, Dimethyl- und Trimethylammoniumkation oder ein quaternäres Ammoniumkation, wie Tetramethylammonium- und Dimethylpiperidiniumkation und quartäre Ammoniumkationen, abgeleitet von Alkylaminen wie Ethylamin, Diethylamin, Triethylamin und deren Mischungen.

Die Alkylethersulfate sind wasserlösliche Salze oder Säuren der Formel RO(A)ₘSO₃M, worin R bevorzugt einen unsubstituierten C₁₀-C₂₄-Alkyl- oder Hydroxyalkylrest, besonders bevorzugt einen C₁₂-C₂₀-Alkyl- oder Hydroxyalkylrest und insbesondere bevorzugt einen C₁₂-C₁₈-Alkyl- oder Hydroxyalkylrest darstellt. A ist eine Ethoxy- oder Propoxyeinheit, m ist eine Zahl von größer als 0, typischerweise zwischen 0,5 und 6, besonders bevorzugt zwischen 0,5 und 3 und M ist ein Wasserstoffatom oder ein Kation, vorzugsweise ein Metallkation (z.B. Natrium, Kalium, Lithium, Calcium, Magnesium, etc.), Ammonium oder ein substituiertes Ammoniumkation. Beispiele für substituierte Ammoniumkationen sind Methyl-, Dimethyl-, Trimethylammonium- und quaternäre Ammoniumkationen wie Tetramethylammonium und Dimethylpiperidiniumkationen, sowie solche, die von Alkylaminen, wie Ethylamin, Diethylamin, Triethylamin oder Mischungen davon, abgeleitet sind. Als Beispiele seien genannt C₁₂-C₁₈-Alkyl-polyethoxylat-(1,0)sulfat, C₁₂-C₁₈-Alkyl-polyethoxylat-(2,25)sulfat, C₁₂-C₁₈-Alkyl-polyethoxylat-(3,0)sulfat, C₁₂-C₁₈-Alkyl-polyethoxylat-(4,0)sulfat, wobei das Kation Natrium oder Kalium ist.

Ebenso geeignet sind Alkylsulfonate mit geradkettigen oder verzweigten C₆-C₂₂-Alkylketten, beispielsweise primäre Paraffinsulfonate, sekundäre Paraffinsulfonate, Alkylarylsulfonate, beispielsweise lineare Alkylbenzolsulfonate mit C₅-C₂₀-Alkylketten, Alkylnaphthalensulfonate, Kondensationsprodukte aus Naphthalensulfonat und Formaldehyd, Lignosulfonat, Alkylestersulfonate, d.h. sulfonierte lineare Ester von C₈-C₂₀-Carboxylsäuren (d.h. Fettsäuren), C₈-C₂₄-Olefinsulfonate, sulfonierte Polycarboxylsäuren, hergestellt durch Sulfonierung der Pyrrolyseprodukte von Erdalkalimetallcitraten. Weitere geeignete anionische Tenside sind ausgewählt aus Alkylglycerinsulfaten, Fettacylglycerinsulfaten, Oleylglycerinsulfaten, Alkylphenolethersulfaten, Alkylphosphaten, Alkyletherphosphaten, Isethionaten wie Acylisethionaten, N-Acyltauriden, Alkylsuccinamaten, Sulfosuccinaten, Monoestern der Sulfosuccinate (besonders gesättigte und ungesättigte C₁₂-C₁₈-Monoester) und Diestern der Sulfosuccinate (besonders gesättigte und ungesättigte C₁₂-C₁₈-Diester), Acylsarcosinaten, Sulfaten von Alkylpolysacchariden wie Sulfaten von Alkylpolyglycosiden, verzweigten primären Alkylsulfaten und Alkylpolyethoxycarboxylaten wie denen der Formel RO(CH₂CH₂O)ₖCH₂COO⁻M⁺ worin R eine C₈-C₂₂-Alkylgruppe, k eine Zahl von 0 bis 10 und M⁺ ein lösliches Salz bildendes Kation ist.

In einer bevorzugten Ausführungsform ist das Gewichtsverhältnis der einen oder der mehreren Verbindungen der Formel (I) zu dem einen oder den mehreren anionischen Tensiden von 95 : 5 bis 5 : 95, bevorzugt von 80 : 20 bis 20 : 80, besonders bevorzugt von 80 : 20 bis 70 : 30 oder von 20 : 80 bis 30 : 70.

Als nichtionische Tenside kommen vorzugsweise in Betracht Fettalkoholethoxylate (Alkylpolyethylenglykole), Alkylphenolpolyethylenglykole, Alkylmercaptanpolyethylenglykole, Fettaminethoxylate (Alkylaminopolyethylenglykole), Fettsäureethoxylate (Acylpolyethylenglykole), Polypropylenglykolethoxylate (z.B. Pluronics^{®}), Fettsäurealkylolamide (Fettsäureamidpolyethylenglykole), N-Alkyl- und N-Alkoxypolyhydroxyfettsäureamide, Alkylpolysaccharide, Saccharoseester, Sorbitester und Polyglykolether.

Als amphotere Tenside kommen vorzugsweise in Betracht Amphoacetate, besonders bevorzugt Monocarboxylate und Dicarboxylate wie Cocoamphocarboxypropionat, Cocoamidocarboxypropionsäure, Cocoamphocarboxyglycinat (oder auch als Cocoamphodiacetat bezeichnet) und Cocoamphoacetat.

An kationischen Tensiden können eingesetzt werden Di-(C₁₀-C₂₄)-Alkyl-dimethylammoniumchlorid oder -bromid, vorzugsweise Di-(C₁₂-C₁₈)-Alkyl-dimethylammoniumchlorid oder -bromid; (C₁₀-C₂₄)-Alkyl-dimethyl-ethylammoniumchlorid oder -bromid; (C₁₀-C₂₄)-Alkyl-trimethylammoniumchlorid oder -bromid, vorzugsweise Cetyltrimethylammoniumchlorid oder -bromid und (C₂₀-C₂₂)-Alkyl-trimethylammoniumchlorid oder -bromid; (C₁₀-C₂₄)-Alkyl-dimethylbenzyl-ammoniumchlorid oder -bromid, vorzugsweise (C₁₂-C₁₈)-Alkyl-dimethylbenzyl-ammoniumchlorid; N-(C₁₀-C₁₈)-Alkyl-pyridiniumchlorid oder -bromid, vorzugsweise N-(C₁₂-C₁₆)-Alkyl-pyridiniumchlorid oder -bromid; N-(C₁₀-C₁₈)-Alkyl-isochinolinium-chlorid, -bromid oder -monoalkylsulfat; N-(C₁₂-C₁₈)-Alkyl-polyoylaminoformylmethyl-pyridiniumchlorid; N-(C₁₂-C₁₈)-Alkyl-N-methyl-morpholinium-chlorid, -bromid oder -monoalkylsulfat; N-(C₁₂-C₁₈)-Alkyl-N-ethyl-morpholinium-chlorid, -bromid oder -monoalkylsulfat; (C₁₆-C₁₈)-Alkyl-pentaoxethyl-ammonium-chlorid; Diisobutyl-phenoxyethoxyethyldimethylbenzylammoniumchlorid; Salze des N,N-Diethylaminoethylstearylamids und -oleylamids mit Salzsäure, Essigsäure, Milchsäure, Zitronensäure, Phosphorsäure; N-Acyl-aminoethyl-N,N-diethyl-N-methyl-ammoniumchlorid, -bromid oder -monoalkylsulfat und N-Acylaminoethyl-N,N-diethyl-N-benzyl-ammonium-chlorid, -bromid oder-monoalkylsulfat, wobei Acyl vorzugsweise für Stearyl oder Oleyl steht.

In einer besonders bevorzugten Ausführungsform enthalten die erfindungsgemäßen Zusammensetzungen ein oder mehrere nichtionische Tenside.

In einer weiteren besonders bevorzugten Ausführungsform enthalten die erfindungsgemäßen Zusammensetzungen ein oder mehrere anionische Tenside. Unter diesen Zusammensetzungen sind wiederum diejenigen bevorzugt, die ein oder mehrere anionische Tenside und ein oder mehrere nichtionische Tenside enthalten.

Als Verdickungsmittel können Xanthan gum und/oder Cellulose, beispielsweise Carboxy-, Methyl-, Ethyl- oder Propylcellulose in den Gewichtsmengen von 0,01 bis 5 %, bezogen auf das fertige Mittel, eingesetzt werden. Als Lösungsmittel eignen sich Kohlenwasserstoffe, bevorzugt aliphatische und aromatische Kohlenwasserstoffe, beispielsweise Mineralöle, Paraffine, Alkylbenzole, beispielsweise Toluol, Xylol, Naphthalinderivate, insbesondere 1-Methylnaphthalin, 2-Methylnaphthalin, (C₆-C₁₆)-Aromatengemische, beispielsweise Solvesso-Reihe (ESSO) mit den Typen Solvesso^{®} 100 (Kp. 162-177°C), Solvesso^{®} 150 (Kp. 187-207°C) und Solvesso^{®} 200 (Kp. 219-282°C), (C₆-C₂₀)-Aliphaten, die linear oder cyclisch sein können, beispielsweise die Shellsol-Reihen, Typen T und K oder BP-n-Paraffine, ebenso halogenierte Kohlenwasserstoffe, beispielsweise Tetrachlormethan, Chloroform, Chlorbenzol, Chlortoluol, Methylenchlorid, Dichlorethan, Ester, beispielsweise Triacetin (Essigsäuretriglycerid), Butyrolacton, Propylencarbonat, Triethylzitrat und Phthalsäure(C₁-C₂₂)-alkylester, insbesondere Phthalsäure-(C₄-C₈-alkylester), Ester von Polyalkoholen, Ether, wie Diethylether, Tetrahydrofuran, Dioxan, Alkylenmonoalkylether und -dialkylether wie z.B. Propylenglykolmonomethylether, Propylenglykolmonoethylether, Ethylenglycol-monomethylether oder -monoethylether, Diglyme und Tetraglyme, Amide wie Dimethylformamid, Dimethylacetamid, Di-n-butylformamid, Dimethylcapryl/caprin-fettsäureamid und N-Alkylpyrrolidon, Ketone, wie Aceton, Cyclohexanon, Isophoron, Acetophenon, Methylethylketon, Sulfoxide und Sulfone wie Dimethylsulfoxid und Sulfolan, Polyglykole, tierische, pflanzliche und mineralische Öle.

In einer bevorzugten Ausführungsform enthalten die erfindungsgemäßen Zusammensetzungen neben der Substanz der Formel (I) ein oder mehrere Lösungsmittel in den Gewichtsmengen von 0 bis 98 Gew.-%, bevorzugt von 5 bis 80 Gew.-% und besonders bevorzugt von 10 bis 50 Gew.-%, bezogen auf die Zusammensetzungen.

In einer weiteren bevorzugten Ausführungsform der Erfindung sind das eine oder die mehreren neben der Substanz der Formel (I) in den erfindungsgemäßen Zusammensetzungen enthaltenen Lösungsmittel ausgewählt aus hochsiedenden aromatischen Lösungsmitteln, vorzugsweise aus aromatischen Lösungsmitteln mit einem Siedepunkt größer als 150°C.

Um die rheologischen Eigenschaften von wässrigen oder lösungsmittelhaltigen Emulsionen oder Suspensionen einzustellen, werden in der Fachliteratur eine Vielzahl von unterschiedlichen Systemen angegeben. Bekannt sind beispielsweise Celluloseether und andere Cellulosederivate (z.B. Carboxymethylcellulose, Hydroxyethylcellulose), Gelatine, Stärke und Stärkederivate, Natriumalginate, Fettsäurepolyethylenglykolester, Agar-Agar, Traganth oder Dextrine. Als synthetische Polymere kommen verschiedene Materialien zum Einsatz, wie z.B. Polyvinylalkohole, Polyacrylamide, Polyvinylamide, Polysulfonsäuren, Polyacrylsäure, Polyacrylsäureester, Polyvinylpyrrolidon, Polyvinylmethylether, Polyethylenoxide, Copolymere aus Maleinsäureanhydrid und Vinylmethylether, sowie diverse Mischungen und Copolymerisate aus den oben angegebenen Verbindungen, einschließlich ihrer verschiedenen Salze und Ester. Diese Polymere können wahlweise vernetzt oder unvernetzt sein.

Als Dispergiermittel und Emulgator eignen sich Anlagerungsprodukte von 2 bis 30 Mol Ethylenoxid und/oder 0 bis 5 Mol Propylenoxid an lineare Fettalkohole mit 8 bis 22 C-Atomen, an Fettsäuren mit 12 bis 22 C-Atomen und an Alkylphenole mit 8 bis 15 C-Atomen in der Alkylgruppe; C₁₂-C₁₈-Fettsäuremono- und -diester von Anlagerungsprodukten von 1 bis 30 Mol Ethylenoxid an Glycerin; Glycerinmono- und -diester und Sorbitanmono- und -diester von gesättigten und ungesättigten Fettsäuren mit 6 bis 22 Kohlenstoffatomen und deren Ethylenoxidanlagerungsprodukten; Anlagerungsprodukte von 15 bis 60 Mol Ethylenoxid an Rizinusöl und/oder gehärtetes Rizinusöl; Polyol- und insbesondere Polyglycerinester wie z.B. Polyglycerinpolyricinoleat und Polyglycerinpoly-12-hydroxystearat. Ebenfalls geeignet sind Gemische von Verbindungen aus mehreren dieser Substanzklassen. Die Anlagerungsprodukte von Ethylenoxid und/oder Propylenoxid an Fettalkohole, Fettsäuren, Alkylphenole, Glycerinmono- und -diester sowie Sorbitanmono- und -diester von Fettsäuren oder an Rizinusöl stellen bekannte, im Handel erhältliche Produkte dar. Es handelt sich dabei um Homologengemische, deren mittlerer Alkoxilierungsgrad dem Verhältnis der Stoffmengen von Ethylenoxid und/oder Propylenoxid und Substrat, mit denen die Anlagerungsreaktion durchgeführt wird, entspricht.

Weitere Adjuvants können Polyglycerinester, Alkoholethoxylate, Alkylpolysacharide, Fettaminethoxylate, Sorbitan- und Sorbitolethoxylatderivate und Derivate von Alk(en)ylbernsteinsäureanhydrid sein. Ebenso kommen Wachse, beispielsweise Montanwachssäuren, deren Seifen ein- und mehrwertiger Kationen und Montanwachsester von ein- und mehrwertigen Alkoholen, Carnaubawachs, Candellilawachs, Zuckerrohrwachs, Torfwachs, nach verschiedenen Verfahren oxidierte bzw. gepfropfte Kohlenwasserstoffverbindungen, sowie alkoxylierte Wachse als weitere Adjuvants in Frage.

Als Konservierungsmittel können organische Säuren und ihre Ester, beispielsweise Ascorbinsäure, Ascorbinpalmitat, Sorbat, Benzoesäure, Methyl- und Propyl-4-hydroxybenzoat, Propionate, Phenol, beispielsweise 2-Phenylphenat, 1,2-Benzisothiazolin-3-on, Formaldehyd, schwefelige Säure und deren Salze eingesetzt werden.

Als Entschäumer eignen sich Polysilicone.

An Frostschutzmittel stehen zur Verfügung Ethylenglykol oder Propylenglykol.

Als Netzmittel können Alkoholethoxylate/-propoxylate verwendet werden.

Als Kältestabilisatoren können alle üblichen für diesen Zweck einsetzbaren Stoffe fungieren. Beispielhaft seien Harnstoff, Glycerin und Propylenglykol genannt.

Als Puffer kommen alle üblichen Säuren und deren Salze in Frage. Vorzugsweise genannt seien Phosphatpuffer, Carbonatpuffer, Zitratpuffer.

Die erfindungsgemäßen Zusammensetzungen besitzen bevorzugt einen pH-Wert von 3 bis 11, besonders bevorzugt von 6 bis 8.

Die erfindungsgemäßen Zusammensetzungen liegen vorzugsweise als Emulsionskonzentrate (EC), Öl-in-Wasser Emulsionen (EW), Wasser-in-Öl Emulsionen, soluble liquids (SL), Suspoemulsionen (SE), Suspensionskonzentrate (SC), Suspensionen, Mikroemulsionen (ME), Dispersionen und Mittel, die aus den vorgenannten erfindungsgemäßen Zusammensetzungen durch Verdünnen mit Wasser und/oder Lösungsmitteln, bevorzugt Wasser, erhältlich sind, vor.

In einer bevorzugten Ausführungsform stellen die erfindungsgemäßen Zusammensetzungen wasserfreie Pflanzenschutzkonzentrate und wasserhaltige Öl-in-Wasser oder Wasser-in-Öl-Pflanzenschutzkonzentrate dar, die zur Herstellung wässriger Spritzbrühen eingesetzt werden können, sowie wässrige SL (soluble liquid) Formulierungen, die zur Steigerung der Wirkstofflöslichkeit eingesetzt werden können. Die soluble liquids enthalten vorzugsweise Wasser aber kein anderes Lösungsmittel.

In einer besonders bevorzugten Ausführungsform stellen die erfindungsgemäßen Zusammensetzungen wasserfreie Konzentrate dar und enthalten vorzugsweise bis zu 90 Gew.-%, besonders bevorzugt 10 bis 80 Gew.-% und insbesondere bevorzugt 15 bis 70 Gew.-% des einen oder der mehreren agrochemischen Wirkstoffe oder Wirksubstanzen und vorzugsweise 1 bis 99 Gew.-%, besonders bevorzugt 5 bis 90 Gew.-% und insbesondere bevorzugt 5 bis 70 Gew.-% der Substanz der Formel (I).

In einer weiteren besonders bevorzugten Ausführungsform stellen die erfindungsgemäßen Zusammensetzungen wasserhaltige Konzentrate dar, vorzugsweise in der Form Öl-in-Wasser oder Wasser-in-Öl, und enthalten vorzugsweise bis zu 50 Gew.-%, besonders bevorzugt 10 bis 45 Gew.-% und insbesondere bevorzugt 20 bis 40 Gew.-% des einen oder der mehreren agrochemischen Wirkstoffe oder Wirksubstanzen und vorzugsweise 1 bis 50 Gew.-%, besonders bevorzugt 5 bis 30 Gew.-% und insbesondere bevorzugt 5 bis 20 Gew.-% der Substanz der Formel (I).

In einer weiteren besonders bevorzugten Ausführungsform stellen die erfindungsgemäßen Zusammensetzungen wässrige SL (soluble liquid) Formulierungen dar und enthalten vorzugsweise bis zu 60 Gew.-%, besonders bevorzugt 10 bis 50 Gew.-% und insbesondere bevorzugt 20 bis 50 Gew.-% des einen oder der mehreren agrochemischen Wirkstoffe oder Wirksubstanzen und vorzugsweise 1 bis 15 Gew.-%, besonders bevorzugt 2 bis 12 Gew.-% und insbesondere bevorzugt 2 bis 8 Gew.-% der Substanz der Formel (I).

Insbesondere bevorzugt liegen die erfindungsgemäßen Zusammensetzungen als emulgierbare Konzentrate (EC) und Öl-in-Wasser Emulsionen (EW) vor. Die emulgierbaren Konzentrate (EC) sind vorzugsweise wasserfrei.

Die emulgierbaren Konzentrate (EC) lassen sich auf einfache Weise dadurch herstellen, dass man in das oder die vorgelegten Lösungsmittel die Wirkstoffe bzw. Wirksubstanzen und gegebenenfalls weitere Formulierungskomponenten eindosiert und unter Rühren löst.
Bei der Anwendung der emulgierbaren Konzentrate (EC) werden die jeweils erforderlichen Volumina abgemessen, in Wasser verrührt und in Form ihrer verdünnten Emulsionen auf dem Feld ausgespritzt.

Bei Emulsionskonzentraten, soluble liquids, Suspoemulsionen und Suspensionskonzentraten handelt es sich um stark konzentrierte Mittel, die bei der Ausbringung mit Wasser auf die gewünschte Spritzkonzentration verdünnt werden. Der Verdünnungsfaktor liegt dabei bevorzugt im Bereich von 10 bis 1000, besonders bevorzugt von 20 bis 200. Durch den Einsatz der erfindungsgemäßen Zusammensetzungen wird die Lagerstabilität der Mittel erhöht.

Pro Hektar werden Mengen an Pestizid, Phytohormon und/oder Herbizid-Safener im Bereich von 0,1 bis 5 kg, bevorzugt 0,3 bis 2,5 kg ausgebracht. Der Anteil des Lösemittels liegt im Bereich von 0,10 bis 2,1 kg/ha. Das Volumen der für die Aussprühung erstellten Formulierung liegt im Bereich von 30 bis 1000 l/ha.

In einer bevorzugten Ausführungsform enthalten die erfindungsgemäßen Zusammensetzungen Wasser. In einer besonders bevorzugten Ausführungsform liegen diese Zusammensetzungen als Spritzbrühe vor und enthalten, bezogen auf die gesamte Spritzbrühe, 0,001 bis 10 Gew.-%, vorzugsweise 0,025 bis 3 Gew.-% und besonders bevorzugt 0,025 bis 2 Gew.-%, an dem einen oder den mehreren agrochemischen Wirkstoffen. In einer insbesondere bevorzugten Ausführungsform der Erfindung werden die Spritzbrühen aus den zuvor genannten konzentrierten Mitteln wie z.B. den wasserfreien Pflanzenschutzkonzentraten, den wasserhaltigen Pflanzenschutzkonzentraten, die z.B. in der Form Öl-in-Wasser oder Wasser-in-Öl vorliegen, oder den wässrigen SL (soluble liquid) Formulierungen aber auch den anderen zuvor genannten konzentrierten Zusammensetzungen, durch Verdünnung mit Wasser hergestellt.

Die erfindungsgemäßen Zusammensetzungen eignen sich beispielsweise in vorteilhafter Weise zur Kontrolle und/oder Bekämpfung von Unkraut. Weiterer Gegenstand der Erfindung ist daher die Verwendung der erfindungsgemäßen Zusammensetzungen, vorzugsweise in der Form einer Spritzbrühe, zur Kontrolle und/oder Bekämpfung von Unkraut.

Zudem eignen sich die erfindungsgemäßen Zusammensetzungen auch zur Regulierung des Wachstums von Pflanzen. Weiterer Gegenstand der Erfindung ist daher auch die Verwendung der erfindungsgemäßen Zusammensetzungen, vorzugsweise in der Form einer Spritzbrühe, zur Regulierung des Wachstums von Pflanzen.

Die erfindungsgemäßen Zusammensetzungen eignen sich zudem in vorteilhafter Weise zur Kontrolle und/oder Bekämpfung von Pilzen. Weiterer Gegenstand der Erfindung ist daher die Verwendung der erfindungsgemäßen Zusammensetzungen, vorzugsweise in der Form einer Spritzbrühe, zur Kontrolle und/oder Bekämpfung von Pilzen.

Die agrochemischen Wirkstoffe und die Substanz der Formel (I) können bei ihrer Anwendung aber auch getrennt voneinander vorliegen und erst kurz vor ihrer Ausbringung miteinander vermischt werden, z.B. im so genannten "Tank-mix"-Verfahren.

Weiterer Gegenstand der vorliegenden Erfindung ist daher auch die Verwendung
a) eines oder mehrerer agrochemischer Wirkstoffe und
b) der Substanz der Formel (I) 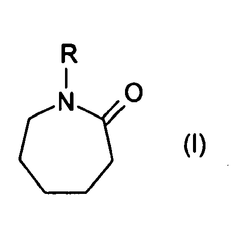
in der R Acetyl ist, zur Kontrolle und/oder Bekämpfung von Unkraut, zur Regulierung des Wachstums von Pflanzen oder zur Kontrolle und/oder Bekämpfung von Pilzen.

Die nachfolgenden Beispiele dienen der näheren Erläuterung der Erfindung ohne sie jedoch darauf einzuschränken. Alle Prozentangaben sind Gewichtsprozente.

### Beispiel 1: Löslichkeiten von agrochemischen Wirkstoffen

Die Löslichkeiten verschiedener agrochemischer Wirksubstanzen in Acetylcaprolactam wurden durch schrittweises Aufkonzentrieren einer Startlösung mit 10 Gew.-% Wirkstoff bei 25°C ermittelt. Die Ergebnisse sind in Tabelle 1 dargestellt.

**Tabelle 1: Löslichkeiten von agrochemischen Wirksubstanzen in Acetylcaprolactam**

| agrochemische Wirksubstanzen | Löslichkeit (Gew.-%) bei 25°C |
|---|---|
| Flufenoxuron | 15 - 20 |
| Pendimethalin | 60 - 65 |
| Phenmedipham | 15 - 20 |
| Prochloraz | 70 - 75 |
| Tebuconazol | 30 - 35 |
| Triforine | 15 - 20 |

### Beispiel 2: Pendimethalin 450 EC

Es wurde ein Emulsionskonzentrat mit 450 g/l Pendimethalin und Acetylcaprolactam hergestellt.

| | |
|---|---|
| Pendimethalin, techn. | 450 g |
| Solvesso 150 | 340 g |
| Acetylcaprolactam | 150 g |
| Emulsogen EL 400 | 45 g |
| Calsogen 4814 | 55 g |

Äußeres der Formulierung bei 20°C, sofort: klar, keine Kristalle Äußeres der Formulierung bei 20°C, nach 14 Tagen Lagerung bei 54°C: klar, keine Kristalle

Mit dem Konzentrat aus Beispiel 2 wurde ein Emulsionstest durchgeführt. Zur Ausbildung der Emulsion wurden 95 Volumenteile Wasser in einem 100 ml Meßzylinder vorgelegt und 5 Volumenteile des Emulsionskonzentrats aus Beispiel 2 zugefügt und durch zehnmaliges Invertieren des geschlossenen Messzylinders homogenisiert.
Die Ergebnisse des Emulsionstests sind in Tabelle 2A dargestellt.

**Tabelle 2A: Emulsionstest Pendimethalin 450 g/l EC mit Acetylcaprolactam**

| Emulsionstest 1 Tag nach Herstellung des ECs [Vol. Emulsionskonzentrat/ Vol. Testwasser] | 5 / 95 |
|---|---|
| Wasserhärte [ppm CaCO₃] | 500 |
| Temperatur [°C] | 30 |
| Spontaneität der Emulsionsbildung | Gut |
| Trennung nach 1 h in ml | 0 |
| Trennung nach 2 h in ml | 0 |
| Trennung nach 6 h in ml | 0 |
| Kristallisation | keine |

### Vergleichsbeispiel 2

Es wurde ein Emulsionskonzentrat mit 450 g/l Pendimethalin, aber ohne Acetylcaprolactam hergestellt.

| | |
|---|---|
| Pendimethalin, techn. | 450 g |
| Solvesso 150 | 422 g |
| Emulsogen IT | 150 g |
| Dichte (25°C): | 1,022 |

Äußeres der Formulierung bei 20°C, sofort: klar, keine Kristalle Äußeres der Formulierung bei 20°C, nach 14 Tagen Lagerung bei 54°C: klar, starke Kristallbildung

Das Emulsionskonzentrat mit 450 g/l Pendimethalin aber ohne Acetylcaprolactam ist nicht lagerstabil und führt bei einer Lagerzeit von 14 Tagen zur Kristallbildung.

Mit dem Konzentrat aus Vergleichsbeispiel 2 wurde ein Emulsionstest durchgeführt. Zur Ausbildung der Emulsion wurden 95 Volumenteile Wasser in einem 100 ml Meßzylinder vorgelegt und 5 Volumenteile des Emulsionskonzentrats aus Vergleichsbeispiel 2 zugefügt und durch zehnmaliges invertieren des geschlossenen Meßzylinders homogenisiert. Die Ergebnisse des Emulsionstests sind.in Tabelle 2B dargestellt.

**Tabelle 2B: Emulsionstest Pendimethalin 450 g/l EC ohne Acetylcaprolactam**

| Emulsionstest 1 Tag nach Herstellung des ECs [Vol. Emulsionskonzentrat/ Vol. Testwasser] | 5 / 95 |
|---|---|
| Wasserhärte [ppm CaCO₃] | 500 |
| Temperatur [°C] | 30 |
| Spontaneität der Emulsionsbildung | Gut |
| Trennung nach 1 h in ml | 0 |
| Trennung nach 2 h in ml | 0 |
| Trennung nach 6 h in ml | 0,5 Rahm |
| Kristallisation | keine |

Die Ergebnisse aus Tabelle 2B zeigen, dass sich nach 6 Stunden 0,5 ml Rahm, d.h. eine weiße, cremige Abscheidung, gebildet hatte.

### Beispiel 3: Flufenoxuron 100 EC

Es wurde ein Emulsionskonzentrat mit 100 g/l Flufenoxuron und Acetylcaprolactam hergestellt.

| | |
|---|---|
| Flufenoxuron 97,9 % | 102,1 g |
| Solvesso 200 ND | 646,4 g |
| Acetylcaprolactam | 168,2 g |
| Emulsogen EL 540 | 35,8 g |
| Calsogen AR 100 ND | 97,5 g |

Äußeres der Formulierung bei 20°C, sofort: klar, keine Kristalle Äußeres der Formulierung bei 20°C, nach 14 Tagen Lagerung bei 54°C: klar, keine Kristalle

Mit dem Konzentrat aus Beispiel 3 wurde ein Emulsionstest durchgeführt. Zur Ausbildung der Emulsion wurden 95 Volumenteile Wasser in einem 100 ml Meßzylinder vorgelegt und 5 Volumenteile des Emulsionskonzentrats zugefügt und durch zehnmaliges invertieren des geschlossenen Meßzylinders homogenisiert.

Die Ergebnisse des Emulsionstests sind in Tabelle 3 dargestellt.

**Tabelle 3: Emulsionstest Flufenoxuron 100 g/l EC mit Acetylcaprolactam**

| Emulsionstest 1 Tag nach Herstellung des ECs [Vol. Emulsionskonzentrat/Vol. Testwasser] | 5 / 95 |
|---|---|
| Wasserhärte [ppm CaCO₃] | 500 |
| Temperatur [°C] | 30 |
| Spontaneität der Emulsionsbildung | Gut |
| Kristallisation | keine |

### Vergleichsbeispiel 3:

Es wurde ein Emulsionskonzentrat mit 100 g/l Flufenoxuron aber ohne Acetylcaprolactam hergestellt.

| | |
|---|---|
| Flufenoxuron 97,9 % | 102,1 g |
| Solvesso 200 ND | 814,6 g |
| Emulsogen EL 400 | 35,8 g |
| Calsogen AR 100 ND | 97,5 g |

Äußeres der Formulierung bei 20°C, sofort: Wirkstoff löst sich nicht vollständig Äußeres der Formulierung bei 20°C, nach 14 Tagen Lagerung bei 54°C: klar, starke Kristallbildung

Das Emulsionskonzentrat mit 100 g/l Flufenoxuron aber ohne Acetylcaprolactam ist nicht lagerstabil und führt bei einer Lagerzeit von 14 Tagen zur Kristallbildung.

### Beispiel 4: Tebuconazol 250 EW

Es wurde ein Konzentrat mit 250 g/l Tebuconazol und Acetylcaprolactam hergestellt.

| | |
|---|---|
| Tebuconazol 96,5 % | 259,0 g |
| Acetylcaprolactam | 568,4 g |
| Wasser | 40,6 g |
| Emulsogen EP 4901 | 101,5 g |
| Emulsogen TS 200 | 20,3 g |
| Dispersogen TP 160 T | 18,7 g |

Äußeres der Formulierung bei 25°C, sofort: klar, keine Kristalle Äußeres der Formulierung bei 24°C, nach 14 Tagen Lagerung bei 54°C: klar, keine Kristalle.
Äußeres der Formulierung bei 24°C, nach 7 Tagen Lagerung bei - 5°C: klar, keine Kristalle.
Mit dem Konzentrat aus Beispiel 4 wurde ein Emulsionstest durchgeführt. Zur Ausbildung der Emulsion wurden 95 Volumenteile Wasser in einem 100 ml Meßzylinder vorgelegt und 5 Volumenteile des Konzentrats aus Beispiel 4 zugefügt und durch zehnmaliges invertieren des geschlossenen Meßzylinders homogenisiert.
Die Ergebnisse des Emulsionstests sind in Tabelle 4 dargesteilt.

**Tabelle 4: Emulsionstest Tebuconazol 250 EW**

| Emulsionstest 1 Tag nach Herstellung des ECs [Vol. Emulsionskonzentrat/Vol. Testwasser] | 5 / 95 |
|---|---|
| Wasserhärte [ppm CaCO₃] | 500 |
| Temperatur [°C] | 30 |
| Spontaneität der Emulsionsbildung | Gut - Grob |
| Trennung nach 1 h in ml | 0 |
| Trennung nach 2 h in ml | 0 |
| Trennung nach 6 h in ml | 0 |
| Kristallisation | keine |

Die Bezeichnung "grob" bedeutet, dass sich eine grobtropfige Emulsion ausgebildet hatte.

Unter ausschließlicher Verwendung von Standardlösemitteln für Pestizidformulierungen, wie z.B. aromatischen Lösemittelgemischen wie Solvesso 150 oder Solvesso 200, d.h. ohne die Verwendung von Acetylcaprolactam, ist Tebuconazol bei der in Beispiel 4 angegebenen Konzentration nicht vollständig zu lösen. Eine entsprechende Formulierung unter alleiniger Verwendung dieser Lösemittel ist daher nicht herstellbar.

### Beispiel 5: 2,4-D IPA 300 SL

2,4-Dichlorphenoxyessigsäure neigt in Form ihrer Aminsalze zum Auskristallisieren aus konzentrierten Lösungen. Es ist Stand der Technik einen etwa 5 %igen Zusatz an NMP zu verwenden, um die Kristallisation zu verhindern. In dem vorliegenden Beispiel wurde das Isopropylaminsalz von 2,4-Dichlorphenoxyessigsäure, kurz 2,4-D IPA, verwendet.

Es wurden konzentrierte wässrige Lösungen von 2,4-D als Isopropylaminsalz (350 g/l) mit so viel demineralisiertem Wasser und dem entsprechenden Lösemittelzusatz versetzt, dass die Konzentration von 2,4-D Isopropylaminsalz 300 g/l und die des getesteten Lösemittels 5 % v/v betrug. Dann wurden Äußeres sofort (s. Spalte 2 von Tabelle 5) und nach Lagerung bei 0°C (s. Spalte 3 von Tabelle 5), sowie das Äußere einer 5 %igen (v/v) Verdünnung in Wasser (Standardwasser nach CIPAC Methode D, enthaltend 500 ppm CaCO₃) beobachtet und notiert (s. Spalten 4 und 5 von Tabelle 5). Dabei wurde besonderer Wert auf eine eventuelle Kristallbildung gelegt. Die Ergebnisse sind in Tabelle 5 dargestellt.

**Tabelle 5: Einfluss verschiedener Lösungsmittelzusätze auf das Löslichkeitsverhalten von 2,4-D Isopropylaminsalz**

| Lösemittelzusatz | Äußeres der Formulierung | Äußeres der Formulierung | Äußeres der Verdünnung | Äußeres der Verdünnung |
|---|---|---|---|---|
| [5 Vol.-%] | [25°C; am Tag der Herstellung] | [nach 48 Stunden bei 0°C] | [5 % in Wasser] | [5 % in Wasser; 24 Stunden, 30°C] |
| N-Methyl-pyrrolidone (Merck K29502572 151) | klare Lösung | klare Lösung | klar | klare Lösung, keine Kristalle |
| Peractive LAC (DEAB 7A102) | klare Lösung | klare Lösung | klar | klare Lösung, keine Kristalle |
| Genagen 4296 (DEGE 910595) | klare Lösung | klare Lösung | trübe Lösung | Probe separiert, Kristallbildung < 1 % |
| Triethyienglycoldimethylether (DEGE 051642) | klare Lösung | klare Lösung | klar | klare Lösung, Kristallbildung > 1 % |
| Tetraethylenglycoldimethylether (DEGE 069013) | klare Lösung | klare Lösung | klar | klare Lösung, Kristallbildung < 1 % |
| Diethylenglycoldibutylether (DEGE 077625) | klare Lösung | klare Lösung | klar | trübe Lösung, Kristallbildung < 1 % |
| Dipropylenglycoldimethylether (DEGE 054826) | klare Lösung | klare Lösung | klar | klare Lösung, Kristallbildung < 1 % |

Unter den gewählten Bedingungen verhielt sich das Peractive LAC am ähnlichsten zum NMP.

### Chemische Bezeichnung der eingesetzten Handelsprodukte

- Flufenoxuron: 1-[4-(2-chloro-α,α,α-trifluoro-p-tolyloxy)-2-fluorophenyl]-3-(2,6-difluoro-benzoyl)harnstoff
- Pendimethalin: N-(1-Ethylpropyl)-3,4-dimethyl-2,6-dinitrophenylamin
- Phenmedipham: 3-[(methoxycarbonylamino]phenyl(3-methylphenyl)carbamat
- Prochloraz: N-Propyl-N-[2-(2,4,6-trichlorophenoxy)ethyl]-1H-imidazol-1-carboxamid
- Tebuconazol: R,S-1-p-chlorophenyl-4,4-dimethyl-3-(1H-1,2,4-triazol-1yl-methyl) pentan-3-ol
- Triforine: N,N'-[1,4-piperazindiylbis[2,2,2-trichloroethyliden)]bis formamid
- Solvesso 150: Aromatische Kohlenwasserstoffe
- Solvesso 200 ND: Aromatische Kohlenwasserstoffe
- Calsogen 4814: Calciumalkylbenzolsulfonat.in 2-Ethylhexanol
- Calsogen AR 100 ND: Calciumalkylbenzolsulfonat in aromatischem Lösungsmittel
- Dispersogen TP 160 T: Polyarylphenyletherphosphat, Triethanolaminsalz
- Emulsogen EL 400: ethoxyliertes Castoröl (40 Mol EO)
- Emulsogen EP 4901: Blockpolyalkoxylat (EO/PO Blockcopolymer)
- Emelsogen TS 200: Polyarylphenylpolyglykolether
- Emulsogen EL 540: ethoxyliertes Castoröl (54 Mol EO)
- Emulsogen IT: Gemische aus ethoxyliertem Castoröl und Calciumalkylbenzolsulfonat im alkohol. Lösungsmittel
- Genagen 4296: Caprinsäuredimethylamid
- Peractive LAC: Acetylcaprolactam

## Patentansprüche

1. Zusammensetzung enthaltend
ä) ein oder mehrere agrochemische Wirkstoffe und
b) die Substanz der Formel (I) 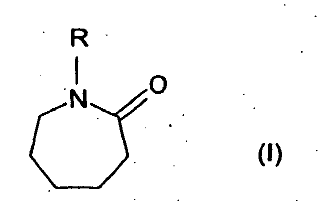
in der R Acetyl, ist.

2. Zusammensetzung nach Anspruch 1, **dadurch gekennzeichnet, dass** das eine oder die mehreren agrochemischen Wirkstoffe ausgewählt sind aus der Gruppe der Pestizide, Phytohormone und Herbizid-Safener, vorzugsweise aus der Gruppe der Pestizide und Herbizid-Safener und besonders bevorzugt aus Pestiziden.

3. Zusammensetzung nach Anspruch 1 oder 2, **dadurch gekennzeichnet, dass** die Pestizide ausgewählt sind aus Herbiziden, Insektiziden, Fungiziden, Akariziden, Bakteriziden, Molluskiden, Nematiziden und Rodentiziden.

4. Zusammensetzung nach einem oder mehreren der Ansprüche 1 bis 3, **dadurch gekennzeichnet, dass** die Phytohormone ausgewählt sind aus Auxinen, vorzugsweise Indol-3-essigsäure, Methyl-4-chlorindol-3-acetat, 4-Chlorindolacetylaspartat, Substanzen aus der Gruppe der Gibberelline (Diterpene) und Zytokinine, wachstumshemmenden Phytohormonen, vorzugsweise Abscisinsäure, Xanthaxine, Jasmonsäure, Jasmonate und Ethylen freisetzenden Substanzen, vorzugsweise L-Methionin.

5. Zusammensetzung nach einem oder mehreren der Ansprüche 1 bis 4, **dadurch gekennzeichnet, dass** die Herbizid-Safener ausgewählt sind aus 4-Dichloroacetyl-3,4-dihydro-3-methyl-2H-1,4-benzoxazine (benzoxacor), Cloquinfocet, Dichlormid, Fenclorim, Herbicide safener AD-67 und Mefenpyr-Diethyl.

6. Zusammensetzung nach einem oder mehreren der Ansprüche 1 bis 5, **dadurch gekennzeichnet, dass** das eine oder die mehreren agrochemischen Wirkstoffe ausgewählt sind aus Flufenoxuron, Pendimethalin, Phenmedipham, Prochloraz, Tebuconazol, Triforine und 2,4-D als Isopropylaminsalz.

7. Zusammensetzung nach einem oder mehreren der Ansprüche 1 bis 6, **dadurch gekennzeichnet, dass** das Gewichtsverhältnis von Komponente a) : Komponente b) von 90 : 1 bis 1 : 90, bevorzugt von 9 : 1 bis 1 : 9 und besonders bevorzugt von 4 : 1 bis 1 : 4 ist.

8. Zusammensetzung nach einem oder mehreren der Ansprüche 1 bis 7, **dadurch gekennzeichnet, dass** sie ein oder mehrere Substanzen ausgewählt aus nichtionischen, anionischen, kationischen und amphoteren Tensiden enthält.

9. Zusammensetzung nach Anspruch 8, **dadurch gekennzeichnet, dass** sie ein oder mehrere nichtionische Tenside enthält.

10. Zusammensetzung nach Anspruch 8 oder 9, **dadurch gekennzeichnet, dass** sie ein oder mehrere anionische Tenside enthält.

11. Zusammensetzung nach einem oder mehreren der Ansprüche 1 bis 10, **dadurch gekennzeichnet, dass** sie neben der Substanz der Formel (I) ein oder mehrere Lösungsmittel in den Gewichtsmengen von 0 bis 98 Gew.-%, bevorzugt von 5 bis 80 Gew.-% und besonders bevorzugt von 10 bis 50 Gew.-%, bezogen auf die Zusammensetzung, enthält.

12. Zusammensetzung nach Anspruch 11, **dadurch gekennzeichnet, dass** das eine oder die mehreren neben der Substanz der Formel (I) enthaltenen Lösungsmittel ausgewählt sind aus hochsiedenden aromatischen Lösungsmitteln und vorzugsweise aus aromatischen Lösungsmitteln mit einem Siedepunkt größer als 150 °C.

13. Zusammensetzung nach einem oder mehreren der Ansprüche 1 bis 12, **dadurch gekennzeichnet, dass** sie ein wasserfreies Konzentrat darstellt und bis zu 90 Gew.-%, bevorzugt 10 bis 80 Gew.-% und besonders bevorzugt 15 bis 70 Gew.-% des einen oder der mehreren agrochemischen Wirkstoffe oder Wirksubstanzen und 1 bis 99 Gew.-%, bevorzugt 5 bis 90 Gew.-% und besonders bevorzugt 5 bis 70 Gew.-% der Substanz der Formel (I) enthält.

14. Zusammensetzung nach einem oder mehreren der Ansprüche 1 bis 12, **dadurch gekennzeichnet, dass** sie ein wasserhaltiges Konzentrat, vorzugsweise in der Form Öl-in-Wasser oder Wasser-in-Öl, darstellt und bis zu 50 Gew.-%, bevorzugt 10 bis 45 Gew.-% und besonders bevorzugt 20 bis 40 Gew.-% des einen oder der mehreren agrochemischen Wirkstoffe oder Wirksubstanzen und 1 bis 50 Gew.-%, bevorzugt 5 bis 30 Gew.-% und besonders bevorzugt 5 bis 20 Gew.-% der Substanz der Formel (I) enthält.

15. Zusammensetzung nach einem oder mehreren der Ansprüche 1 bis 12, **dadurch gekennzeichnet, dass** sie eine wässrige SL (soluble liquid) Formulierung darstellt und bis zu 60 Gew.-%, bevorzugt 10 bis 50 Gew.-% und besonders bevorzugt 20 bis 50 Gew.-% des einen oder der mehreren agrochemischen Wirkstoffe oder Wirksubstanzen und 1 bis 15 Gew.-%, bevorzugt 2 bis 12 Gew.-% und besonders bevorzugt 2 bis 8 Gew.-% der Substanz der Formel (I) enthält.

16. Zusammensetzung nach einem oder mehreren der Ansprüche 1 bis 12, **dadurch gekennzeichnet, dass** sie Wasser enthält.

17. Zusammensetzung nach Anspruch 16, **dadurch gekennzeichnet, dass** sie als Spritzbrühe vorliegt und, bezogen auf die gesamte Spritzbrühe, 0,001 bis 10 Gew.-%, bevorzugt 0,025 bis 3 Gew.-% und besonders bevorzugt 0,025 bis 2 Gew.-% an dem einen oder den mehreren agrochemischen Wirkstoffen enthält.

18. Zusammensetzung nach Anspruch 17, **dadurch gekennzeichnet, dass** sie durch Verdünnung einer Zusammensetzung nach den Ansprüchen 13 bis 15 mit Wasser erhalten worden ist.

19. Verwendung einer Zusammensetzung nach Anspruch 17 oder 18 zur Kontrolle und/oder Bekämpfung von Unkraut .

20. Verwendung einer Zusammensetzung nach Anspruch 17 oder 18 zur Regulierung des Wachstums von Pflanzen.

21. Verwendung einer Zusammensetzung nach Anspruch 17 oder 18 zur Kontrolle und/oder Bekämpfung von Pilzen.

22. Verwendung
a) eines oder mehrerer agrochemischer Wirkstoffe und
b) der Substanz der Formel (I) 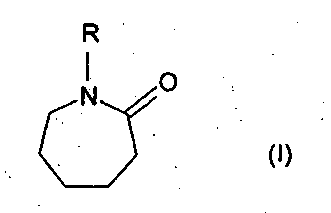
in der R Acetyl ist, zur Kontrolle und/oder Bekämpfung von Unkraut, zur Regulierung des Wachstums von Pflanzen oder zur Kontrolle und/oder Bekämpfung von Pilzen.

## Claims

1. A composition comprising
a) one or more active agrochemical ingredients and
b) the substance of the formula (I) 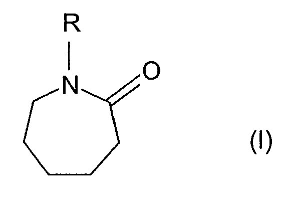
in which R is acetyl.

2. The composition as claimed in claim 1, wherein the one or more active agrochemical ingredients are selected from the group of pesticides, phytohormones, and herbicide safeners, preferably from the group of pesticides and herbicide safeners, and more preferably from pesticides.

3. The composition as claimed in claim 1 or 2, wherein the pesticides are selected from herbicides, insecticides, fungicides, acaricides, bactericides, molluscicides, nematicides, and rodenticides.

4. The composition as claimed in one or more of claims 1 to 3, wherein the phytohormones are selected from auxins, preferably indole-3-acetic acid, methyl 4-chloroindole-3-acetate, 4-chloroindoleacetyl aspartate, substances from the group of the gibberellins (diterpenes) and cytokinins, growth-inhibiting phytohormones, preferably abscisic acid, xanthaxins, jasmonic acid, jasmonates, and ethylene donor substances, preferably L-methionine.

5. The composition as claimed in one or more of claims 1 to 4, wherein the herbicide safeners are selected from 4-dichloroacetyl-3,4-dihydro-3-methyl-2H-1,4-benzoxazine (benzoxacor), cloquinfocet, dichlormid, fenclorim, herbicide safener AD-67, and mefenpyr-diethyl.

6. The composition as claimed in one or more of claims 1 to 5, wherein the one or more active agrochemical ingredients are selected from flufenoxuron, pendimethalin, phenmedipham, prochloraz, tebuconazole, triforine, and 2,4-D in isopropylamine salt form.

7. The composition as claimed in one or more of claims 1 to 6, wherein the weight ratio of component a):component b) is from 90:1 to 1:90, preferably from 9:1 to 1:9, and more preferably from 4:1 to 1:4.

8. The composition as claimed in one or more of claims 1 to 7, comprising one or more substances selected from nonionic, anionic, cationic, and amphoteric surfactants.

9. The composition as claimed in claim 8, comprising one or more nonionic surfactants.

10. The composition as claimed in claim 8 or 9, comprising one or more anionic surfactants.

11. The composition as claimed in one or more of claims 1 to 10, comprising besides the substance of the formula (I) one or more solvents in amounts by weight from 0% to 98%, preferably from 5% to 80%, and more preferably from 10% to 50%, by weight based on the composition.

12. The composition as claimed in claim 11, wherein the one or more solvents present besides the substance of the formula (I) are selected from high-boiling aromatic solvents and preferably from aromatic solvents having a boiling point greater than 150°C.

13. The composition as claimed in one or more of claims 1 to 12, which constitutes a water-free concentrate and contains up to 90%, preferably 10% to 80%, and more preferably 15% to 70% by weight of the one or more active agrochemical ingredients or active agrochemical substances and 1% to 99%, preferably 5% to 90%, and more preferably 5% to 70% by weight of the substance of the formula (I).

14. The composition as claimed in one or more of claims 1 to 12, which constitutes a water-containing concentrate, preferably in the oil-in-water or water-in-oil form, and contains up to 50%, preferably 10% to 45%, and more preferably 20% to 40% by weight of the one or more active agrochemical ingredients or active agrochemical substances and 1% to 50%, preferably 5% to 30%, and more preferably 5% to 20% by weight of the substance of the formula (I).

15. The composition as claimed in one or more of claims 1 to 12, which constitutes an aqueous SL (soluble liquid) formulation and contains up to 60%, preferably 10% to 50%, and more preferably 20% to 50% by weight of the one or more active agrochemical ingredients or active agrochemical substances and 1% to 15%, preferably 2% to 12%, and more preferably 2% to 8% by weight of the substance of the formula (I).

16. The composition as claimed in one or more of claims 1 to 12, comprising water.

17. The composition as claimed in claim 16, which is in the form of a spray liquor and contains, based on the overall spray liquor, 0.001% to 10%, preferably 0.025% to 3%, and more preferably 0.025% to 2% by weight of the one or more active agrochemical ingredients.

18. The composition as claimed in claim 17, obtained by diluting a composition as claimed in any of claims 13 to 15 with water.

19. The use of a composition as claimed in claim 17 or 18 for checking and/or controlling weeds.

20. The use of a composition as claimed in claim 17 or 18 for regulating the growth of plants.

21. The use of a composition as claimed in claim 17 or 18 for checking and/or controlling fungi.

22. The use of
a) one or more active agrochemical ingredients and
b) the substance of the formula (I) 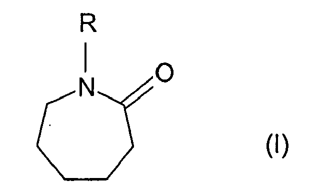
in which R is acetyl, for checking and/or controlling weeds, for regulating the growth of plants or for checking and/or controlling fungi.

## Revendications

1. Composition contenant
a) un ou plusieurs principes actifs agrochimiques et
b) la substance de formule (I) 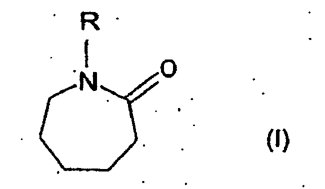
dans laquelle R est le groupe acétyle.

2. Composition selon la revendication 1, **caractérisée en ce que** ledit/lesdits un ou plusieurs principe (s) actif (s) agrochimique (s) est/sont choisi (s) dans le groupe des pesticides, des phytohormones et des phytoprotecteurs contre les herbicides, de préférence dans le groupe des pesticides et des phytoprotecteurs contre les herbicides et de façon particulièrement préférée parmi les pesticides.

3. Composition selon la revendication 1 ou 2, **caractérisée en ce que** les pesticides sont choisis parmi les herbicides, les insecticides, les fongicides, les acaricides, les bactéricides, les molluscicides, les nématicides et les rodenticides.

4. Composition selon une ou plusieurs des revendications 1 à 3, **caractérisée en ce que** les phytohormones sont choisies parmi les auxines, de préférence l'acide indol-3-acétique, le 4-chlorindol-3-acétate de méthyle, l'aspartate de 4-chlorindolacétyle, des substances choisies dans le groupe des gibbérellines (diterpènes) et des cytokinines, des phytohormones inhibitrices de croissance, de préférence l'acide abscisique, les xanthanines, l'acide jasmonique, les jasmonates et des substances libérant de l'éthylène, de préférence la L-méthionine.

5. Composition selon une ou plusieurs des revendications 1 à 4, **caractérisée en ce que** le phytoprotecteur contre les herbicides est choisi parmi la 4-dichloracétyl-3,4-dihydro-3-méthyl-2H-1,4-benzoxazine (benzoxacor), le cloquinfocet, le dichlormide, le fenchlorim, les phytoprotecteurs contre les herbicides AD-67 et méfenpyr-diéthyl.

6. Composition selon une ou plusieurs des revendications 1 à 5, **caractérisée en ce que** ledit/lesdits un ou plusieurs principe(s) actif(s) agrochimique(s) est/sont choisi(s) parmi le flufénoxuron, la pendiméthaline, le phenmédipham, le prochloraz, le tébuconazole, la triforine et le 2,4-D sous forme de sel d'isopropylamine.

7. Composition selon une ou plusieurs des revendications 1 à 6, **caractérisée en ce que** le rapport pondéral composant a):composant b) va de 90:1 à 1:90, de préférence de 9:1 à 1:9 et de façon particulièrement préférée de 4:1 à 1:4.

8. Composition selon une ou plusieurs des revendications 1 à 7, **caractérisée en ce qu'**elle contient une ou plusieurs substances choisies parmi les tensioactifs non ioniques, anioniques, cationiques et amphotères.

9. Composition selon la revendication 8, **caractérisée en ce qu'**elle contient un ou plusieurs tensioactifs non ioniques.

10. Composition selon la revendication 8 ou 9, **caractérisée en ce qu'**elle contient un ou plusieurs tensioactifs anioniques.

11. Composition selon une ou plusieurs des revendications 1 à 10, **caractérisée en ce qu'**en plus de la substance de formule (I) elle contient un ou plusieurs solvants en les quantités pondérales de 0 à 98 % en poids, de préférence de 5 à 80 % en poids et de façon particulièrement préférée de 10 à 50 % en poids, par rapport à la composition.

12. Composition selon la revendication 11, **caractérisée en ce que** ledit ou lesdits un ou plusieurs solvant(s) contenu(s) en plus de la substance de formule (I) est/sont choisi(s) parmi des solvants aromatiques à haut point d'ébullition et de préférence parmi des solvants aromatiques ayant un point d'ébullition supérieur à 150 °C.

13. Composition selon une ou plusieurs des revendications 1 à 12, **caractérisée en ce qu'**elle représente un concentré anhydre et contient jusqu'à 90 % en poids, de préférence de 10 à 80 % en poids et de façon particulièrement préférée de 15 à 70 % en poids dudit/desdits un ou plusieurs principe(s) actif(s) ou de ladite/lesdites une ou plusieurs substance(s) active(s) agrochimiques et de 1 à 99 % en poids, de préférence de 5 à 90 % en poids et de façon particulièrement préférée de 5 à 70 % en poids de la substance de formule (I).

14. Composition selon une ou plusieurs des revendications 1 à 12, **caractérisée en ce qu'**elle représente un concentré aqueux, de préférence sous forme huile-dans-eau ou eau-dans-huile et contient jusqu'à 50 % en poids, de préférence de 10 à 45 % en poids et de façon particulièrement préférée de 20 à 40 % en poids dudit/desdits un ou plusieurs principe(s) actif(s) ou de ladite/lesdites une ou plusieurs substance(s) active(s)e agrochimiques et de 1 à 50 % en poids, de préférence de 5 à 30 % en poids et de façon particulièrement préférée de 5 à 20 % en poids de la substance de formule (I).

15. Composition selon une ou plusieurs des revendications 1 à 12, **caractérisée en ce qu'**elle représente une composition aqueuse SL (liquide soluble) et contient jusqu'à 60 % en poids, de préférence de 10 à 50 % en poids et de façon particulièrement préférée de 20 à 50 % en poids dudit/desdits un ou plusieurs principe(s) actif(s) ou de ladite/lesdites une ou plusieurs substance(s) active(s) agrochimiques et de 1 à 15 % en poids, de préférence de 2 à 12 % en poids et de façon particulièrement préférée de 2 à 8 % en poids de la substance de formule (I).

16. Composition selon une ou plusieurs des revendications 1 à 12, **caractérisée en ce qu'**elle contient de l'eau.

17. Composition selon la revendication 16, **caractérisée en ce qu'**elle est présente sous forme de bouillie à pulvériser et contient, par rapport à la bouillie à pulvériser totale, de 0,001 à 10 % en poids, de préférence de 0,025 à 3 % en poids et de façon particulièrement préférée de 0,025 à 2 % en poids dudit ou desdits un ou plusieurs principes actifs agrochimiques.

18. Composition selon la revendication 17, **caractérisée en ce qu'**elle a été obtenue par dilution d'une composition selon les revendications 13 à 15 avec de l'eau.

19. Utilisation d'une composition selon la revendication 17 ou 18, pour la maîtrise de et/ou la lutte contre des adventices.

20. Utilisation d'une composition selon la revendication 17 ou 18, pour la régulation de la croissance de plantes.

21. Utilisation selon la revendication 17 ou 18, pour la maîtrise de et/ou la lutte contre des champignons.

22. Utilisation
a) d'un ou plusieurs principes actifs agrochimiques et
b) de la substance de formule (I) 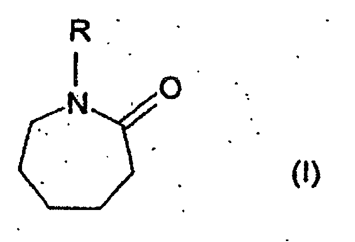
dans laquelle R est le groupe acétyle, pour la maîtrise de ou la lutte contre des adventices, pour la régulation de la croissance de plantes ou pour la maîtrise de et/ou la lutte contre des champignons.
